Europäisches Patentamt

European Patent Office

Office européen des brevets

(11) Publication number: **0 353 017**
**A1**

# EUROPEAN PATENT APPLICATION

(21) Application number: **89307528.3**

(22) Date of filing: **25.07.89**

(51) Int. Cl.⁵: **B 60 B 3/16**
**F 16 B 39/10**

(30) Priority: **27.07.88 GB 8817925**

(43) Date of publication of application:
**31.01.90 Bulletin 90/05**

(84) Designated Contracting States:
**AT BE CH DE ES FR GB IT LI NL SE**

(71) Applicant: **WHEEL-O-WARD LTD.**
**44 Bull Street**
**Darlaston WS10 8AX (GB)**

(72) Inventor: **Ward, Peter Joseph**
**22 Avenue Road**
**Darlaston, WS10 8AR (GB)**

**Ward, Terrence Wilfred**
**2 Seeds Lane**
**Brownhills West Midlands (GB)**

(74) Representative: **Carpenter, David**
**MARKS & CLERK Alpha Tower Suffolk Street Queensway**
**Birmingham B1 1TT (GB)**

(54) Wheel security device.

(57) A security device for use with a wheel/hub combination, the device comprising a support (11) for attachment to the wheel/hub combination in use, and, a plurality of nut engaging elements (19, 21) carried by said support (11) for resilient engagement with respective wheel-retaining nuts (16) of the wheel/hub combination so as to resist rotation of the nuts (16) relative to the wheel/hub combination.

FIG 2

FIG 6

## Description

### WHEEL SECURITY DEVICE

This invention relates to a wheel security device particularly, but not exclusively, for use on commercial vehicles.

Slackening of the wheel retaining nuts is now recognised as a contributory factor in a significant proportion of commercial vehicle accidents and failures. It will be understood that if the wheel retaining nuts become loose then there exists the facility for relative movement between the wheel and its respective hub, with the attendant risk of damage to the studs and/or the wheel giving rise to the wheel becoming detached from the hub.

It is common to secure a wheel to its respective hub by means of nuts which engage screw-threaded studs protruding through the wheel from the hub. The wheel is clamped against the hub by the nuts. There is however an alternative fixing in which headed studs (in effect bolts) extend through apertures in the wheel and into threaded engagement with bores in the hub, the heads of the studs clamping the wheel against the hub. Since the use of separate studs and nuts is more common, reference will be made herein to the use of "wheel retaining nuts" and it is to be understood that this term also embraces the type of wheel fastening where the stud has an integral head and is inserted through the wheel and into a screw-threaded bore in the hub.

It is an object of the present invention to provide a device whereby the risk of slackening of the wheel nuts of a vehicle is minimised.

In accordance with the present invention there is provided a security device for use with a wheel/hub combination, the device comprising a support for attachment to the wheel/hub combination in use, and, a plurality of nut engaging elements carried by said support for resilient engagement with respective wheel-retaining nuts of the wheel/hub combination so as to resist rotation of the nuts relative to the wheel/hub combination.

Desirably, said nut engaging elements comprise a plurality of spring strips, at least one for each nut, each strip being anchored to said support and, in use, engaging the circumference of a respective nut so as to resist said rotation of the nut.

Preferably, each of said spring strips is shaped to be able to receive a corner forming part of the circumference of its respective nut.

Desirably, each of said spring strips is shaped also to be able to bear against a flat of its respective nut.

Preferably, said nut engaging elements are provided in pairs, there being one pair for each nut.

Desirably, the angular orientation of each element within each pair is such that while one of the elements receives a corner of its respective nut the other element is engaged with a flat of the nut.

Alternatively, said elements of each pair are diametrically opposed so as to be engageable with respective opposite corners of the nut.

Conveniently, said support is annular.

One example of the invention is illustrated in the accompanying drawings wherein

Figures 1 and 2 are diagrammatic perspective views of a wheel security device,

Figure 3 is an enlargement of part of Figure 2,

Figure 4 is a plan view illustrating the components of Figure 3 engaged with a respective nut,

Figure 5 is a view similar to Figure 3 of a further part of the device again showing its cooperation with a wheel retaining nut.

Figure 6 is a view similar to Figure 3 of a modified arrangement of spring strips,

Figure 7 is a plan view of a modification, and,

Figure 8 is a perspective view of the modification shown in Figure 7 in use.

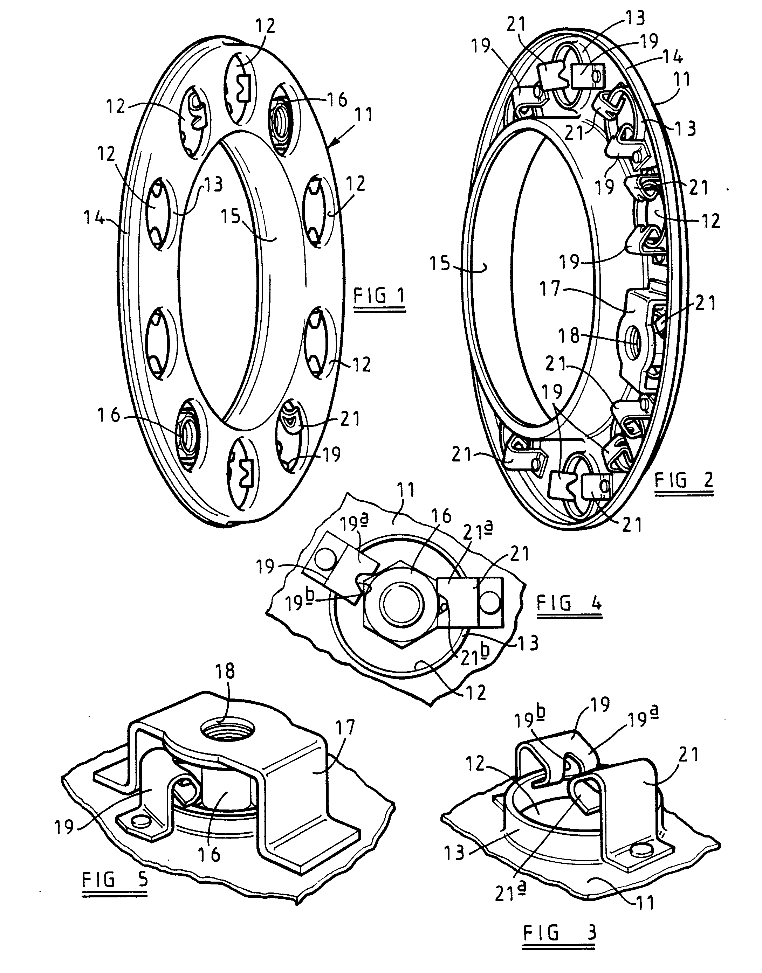

The wheel security device illustrated in Figures 1 to 5 of the drawings comprises a rigid, annular, metal pressing 11 which conveniently is chromium plated to improve its appearance. The pressing 11 constitutes the support of the device and as is clear from Figures 1 and 2 it comprises a planar annular region having therein a circular row of ten, equi-angularly spaced, apertures 12. Each of the apertures 12 is a plunged aperture, its wall being extended at right angles to the plane of the annulus to define a short cylindrical flange 13 integral with and upstanding from one face of the planar portion of the pressing. At its outer periphery the pressing includes a short, upstanding, peripheral flange 14 and there is a similar, but axially longer upstanding flange 15 at the inner periphery. The flanges 13, 14, 15 protrude parallel to one another from the same face of the planar portion.

The device illustrated in the drawings is intended for use in conjunction with a wheel/hub combination wherein the wheel is secured to the hub by ten equi-angularly spaced wheel retaining nuts 16 each of which is in screw-threaded engagement with a respective stud projecting outwardly from the hub and passing through a corresponding aperture in the wheel. The circular row of studs and nuts is equal in diameter to the circular row of apertures 12, and thus the pressing 11 can be offered to a wheel/hub combination so that the nuts 16 lie within respective apertures 12. The diameter of each aperture 12 is such that a nut 16 can be received freely therein and moreover such that a socket wrench or similar tool can be introduced through an aperture 12 to coact with the respective nut 16.

In order that the pressing 11 can be retained on the wheel/hub combination each of a pair of diametrically opposed apertures 12 has associated therewith a retaining bridge 17. The two retaining bridges 17 are received within the recess defined between the flanges 14 and 15 and each comprises a U-shaped rigid metal member secured to the pressing 11 and having therein an aperture 18 sufficiently large to permit a stud to extend therethrough, but too small to permit passage of a nut. When the device is to be secured to a wheel/hub combination the nuts of a diametrically opposed pair of studs are removed, the pressing 11 is offered to the wheel/hub combination so that the studs pass through the apertures 18 of the bridges 17 and the two nuts are then re-engaged with their respective studs so that the bridges 17 are trapped between the nuts and the wheel thus retaining the pressing 11 on the wheel/hub combination.

Secured within the recess between the flanges 14 and 15, and associated with each aperture 12, are respective first and second spring steel strips 19, 21. Each strip 19, 21 includes a foot portion by means of which the strip is secured to the planar region of the pressing 11 for example by riveting or by welding, or in any other convenient manner. Upstanding at right angles from the foot portion is a leg portion rolled over at its free end to form a nut engaging region indicated by the suffix a (see Figure 3). Each of the nut engaging regions 19a, 21a has a rectilinear region with a centrally disposed V-shaped notch cut therein, the notches being indicated by the suffix b in the drawings.

Each of the apertures 12 thus has a pair of spring strips 19, 21 associated therewith. As is clear from Figure 4 the two strips associated with each aperture 12 are not positioned diametrically opposite one another, but instead are spaced from diametrically opposed positions by a small angle equal to half the angle subtended between adjacent corners of a nut 16. Thus, where a nut 16 is hexagonal in cross-section then one of the two strips 19, 21 is displaced in relation to the other strip by 30ç from a diametrically opposed position. The nut engaging portions 19a, 21a of the strips 19, 21 protrude inwardly towards the centre of their respective aperture 12, and their radially inwardly protrusion is of such an extent that they will engage, and bear against a wheel retaining nut 16 positioned within the respective aperture 12. The angular orientation of the strips 19, 21 with respect to one another ensures that when the nut engaging portion of one of the two strips 19, 21 is engaged with a flat of its respective nut then a corner of the respective nut is engaged in the notch 19b or 21b of the nut engaging portion of the other strip. As mentioned, when a nut is between a pair of strips then the leg portions of the strips are flexed outwardly such that the nut engaging portions of the strips bear against the nut and grip it between them. Clearly, any rotation of the nut between its respective strips will entail flexure of the strips away from one another against the action of their resilience, and so will be resisted. Moreover, if such rotation should occur then it will be recognised that positive gripping of the nut will again be re-established after 30ç of rotation of the nut when again one of the nut engaging portions will engage a flat of the nut and the other will have a corner of the nut engaged in its notch. The faces of the nut engaging portions presented outwardly in use are inclined so that a socket spanner or the like inserted through an aperture 12 to manipulate a nut 16 will deflect the respective strips 19,21 away from the nut as it is inserted.

The pairs of strips 19, 21 are also applied to the apertures 12 which have the bridges 17 associated therewith. Thus, all ten nuts will positively be restrained against inadvertent rotation on their studs and the risk of inadvertent slackening of the nuts, for example, by virtue of vibration, will be minimised.

It is to be understood that the shape and dimensions of the device will be chosen to suit the particular application. Thus versions may be constructed for use with wheel/hub combinations having more, or fewer, than ten nuts. Furthermore, although it is desirable to use a chromium plated pressing 11 as the support for the spring strips 19, 21 since such a device constitutes an aesthetically pleasing wheel trim, the use of such a pressing is not essential and in its simplest form, the support could be a plane metal annulus of appropriate diameter having therein an appropriate number of suitably positioned and dimensioned apertures to accommodate the wheel retaining nuts of the wheel/hub combination. Furthermore, although it is preferred to use an arrangement of diametrically opposed bridges 17 to secure the support to the wheel/hub combination it is of course possible that other forms of securing could be utilised. For example, one or more securing screws could pass through the support between the apertures 12 and into the wheel/hub combination to secure the support in position.

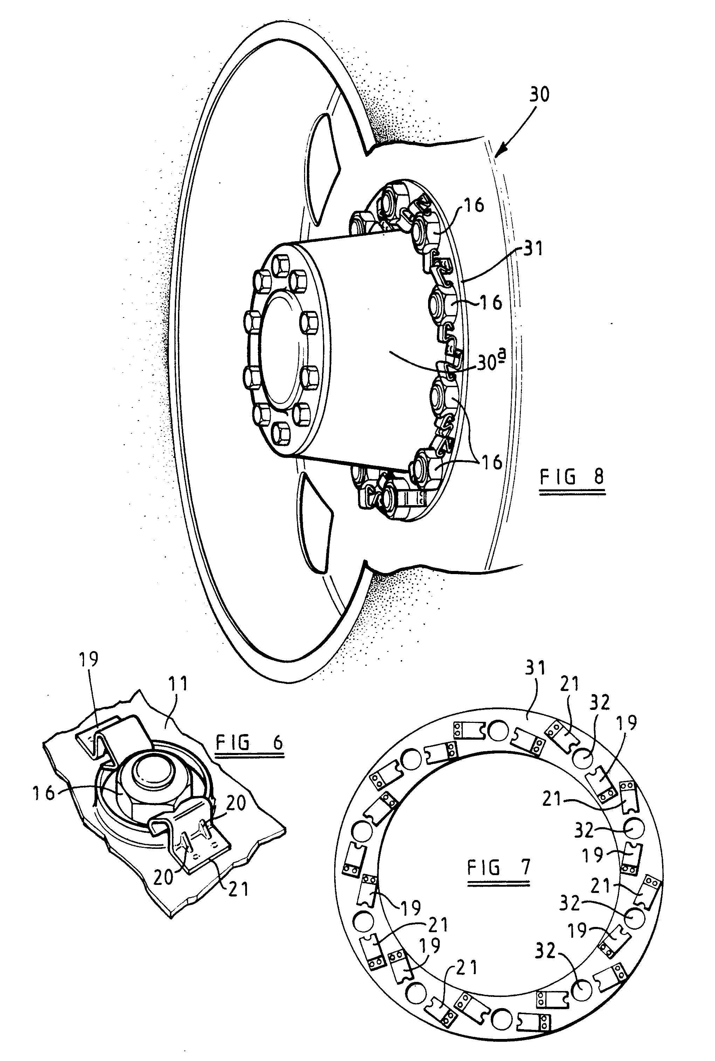

In the modification illustrated in Figure 6 it can be seen that the strips 19 and 21 are diametrically opposed so as both to engage respective, opposed corners or flats of the respective nut. Preferably the strips will engage opposite corners of the nut. Such an arrangement may be used in place of the 30° displacement described with reference to Figures 1 to 5, the arrangement affording greater resistance to rotation but less accommodation of nut angular positioning than the 30° displacement version. Moreover the springs 19 and 21 in the Figure 6 arrangement are each projection welded at a spaced pair of points on their foot portions to the pressing 11 and it is to be understood that the strips of the embodiments described above could similarly be projection welded to the pressing. In the Figure 6 arrangement the bend in each strip 19, 21 between the integral foot and leg portions is rigidified by at least one (preferably two) ribs 20 stamped into the material of the strips 19, 21 during manufacture. Such ribs 20 can be utilized in the strips of the other embodiments described above. In order to optimise the engagement of the or each strip 19, 21 with a corner of the respective nut 16. The notch 19b, 21b of the strip is a V-shaped notch having an included angle equal to the corner angle of the nut (60° in the case of a hexagonal nut).

Figures 7 and 8 illustrate a modification of the device for use with "hub reduction" arrangements wherein the dimensional constraints imposed by the nature of the wheel/hub combination is such that the devices described above with reference to Figures 1 to 6 cannot be utilized. The modified device comprises a plane steel annulus 31 the inner diameter of which is such that it encircles closely the protruding portion 30a of the wheel/hub combination 30. The annulus 31 is formed with a circular row of apertures 32 through which the studs, which receive the wheel retaining nuts 16, protrude. The apertures 32 differ from the apertures 12 of the arrangement illustrated in Figures 1 to 6 in that the apertures 32 are of much smaller size. The studs can pass through the apertures 32 but the nuts 16 cannot.

Resilient strips 19, 21 equivalent to the strips 19, 21 of the device illustrated in Figures 1 to 6 are secured to the annulus 31 in association with each aperture 32.

Although the operation of the device of Figures 7 and 8 is substantially identical to that described above in relation to Figures 1 to 6 the manner in which it is fitted to the wheel/hub combination 30 differs. Thus prior to engagement of the nuts 16 with the studs the annulus 31 is threaded over the studs so that the studs protrude through the apertures 32. The annulus is presented to the wheel with the strips 19, 21 presented outwardly, and thus the annulus 31 presents a plane face to the wheel. The nuts 16 are then engaged with the protruding portions of their respective studs and are tightened so that in addition to clamping the wheel to the hub, the nuts 16 also clamp the annulus 31 to the wheel/hub combination 30. The strips 19, 21 each cooperate with a respective nut 16 as described above in relation to the device of Figures 1 to 5 and it will be recognised that if desired a protective and/or decorative cover could be engaged over the annulus 31, the nuts 16 and the strips 19, 21. For example, such a cover could be moulded in synthetic resin material and could have internal protrusions which grip the nuts 16 or the strips 19, 21 to retain it in position. Moreover the variations described above with reference to Figure 6 can be applied to the arrangement of Figures 7 and 8.

Although it is preferred to manufacture the strips 19, 21 from spring steel strip, the use of synthetic resin material is not excluded. For example, it may prove convenient to produce the spring strips 19, 21 as individual synthetic resin mouldings or as sections cut from an elongate synthetic resin extrusion. It is however necessary for the strips to be sufficiently resilient to grip the nuts with adequate force to resist inadvertent rotation. Reinforced synthetic resin materials such as glass reinforced materials or carbon fibre reinforced materials may prove suitable. Moreover the pressing 11 or annulus 31 may be replaced with synthetic resin or reinforced synthetic resin components.

## Claims

1. A security device for use with a wheel/hub combination, the device being characterized by comprising a support (11, 31) for attachment to the wheel/hub combination in use, and, a plurality of nut engaging elements (19, 21) carried by said support (11, 31) for resilient engagement with respective wheel-retaining nuts (16) of the wheel/hub combination so as to resist rotation of the nuts (16) relative to the wheel/hub combination.

2. A device as claimed in Claim 1 characterized in that said nut engaging elements comprise a plurality of spring strips (19, 21), at least one for each nut (16), each strip (19, 21) being anchored to said support (11, 31) and, in use, engaging the circumference of a respective nut (16) so as to resist said rotation of the nut.

3. A device as claimed in Claim 1 and Claim 2 characterized in that each of said spring strips (19, 21) is shaped to be able to receive a corner forming part of the circumference of its respective nut (16).

4. A device as claimed in Claim 3 characterized in that each of said spring strips is shaped also to be able to bear against a flat of its respective nut.

5. A device as claimed in Claim 4 characterized in that each strip (19, 21) has a generally rectilinear region for engagement with a flat of the nut and a notch (21b) in said region for receiving a corner of the nut.

6. A device as claimed in Claim 5 characterized in that said notch 21b is V-shaped having an included angle equal to that of the corner of the nut to be engaged in use.

7. A device as claimed in any one of Claims 1 to 6 characterized in that said nut engaging elements (19, 21) are provided in pairs, there being one pair for each nut (16).

8. A device as claimed in Claim 7 characterized in that the angular orientation of each element (19, 21) within each pair is such that while one of the elements receives a corner of its respective nut (16) the other element is engaged with a flat of the nut.

9. A device as claimed in Claim 7 characterized in that the elements (19, 21) of each pair are diametrically opposite one another in relation to the nut received therebetween in use.

FIG 1

FIG 2

FIG 4

FIG 5

FIG 3

FIG 8

FIG 6

FIG 7

# European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 798 770 (TERRICK)<br>* Column 1, line 67 - column 2, line 66; figures 1-12 * | 1 | B 60 B 3/16<br>F 16 B 39/10 |
| Y | | 2,4,7 | |
| Y | DE-C- 44 547 (STOERMANN)<br>* >Page 1, left-hand column, line 5 - page 2, right-hand column, line 14; figures 1-7 * | 2,4,7 | |
| A | GB-A- 410 888 (HAMILL)<br>* Page 3, lines 62-87; figures 1-12 * | 1,3 | |
| A | US-A-2 758 628 (RICE)<br>* Column 2, lines 17-36; figures 1-5 * | 1 | |
| A | EP-A-0 084 764 (AB AGORA)<br>* Page 3, lines 3-24; figures 1-6a * | 1 | |
| A | US-A-3 420 287 (McCORMICK)<br>* Column 1, line 50 - column 2, line 3; figure 1 * | 5 | TECHNICAL FIELDS SEARCHED (Int. Cl.5)<br><br>B 60 B<br>F 16 B |

The present search report has been drawn up for all claims

| Place of search | Date of completion of the search | Examiner |
|---|---|---|
| THE HAGUE | 02-11-1989 | AYITER I. |